Europäisches Patentamt

European Patent Office

Office européen des brevets

(19)

(11) EP 0 939 062 A1

(12) **EUROPÄISCHE PATENTANMELDUNG**

(43) Veröffentlichungstag:
01.09.1999 Patentblatt 1999/35

(51) Int Cl.$^6$: **C03C 17/36**

(21) Anmeldenummer: 99810163.8

(22) Anmeldetag: 24.02.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 26.02.1998 CH 45598

(71) Anmelder: Glas Trösch Holding AG
3011 Bern (CH)

(72) Erfinder: **Dietrich, Anton Dr.**
8052 Bertrange (LU)

(74) Vertreter: **Roshardt, Werner Alfred, Dipl.-Phys.**
**Keller & Partner**
**Patentanwälte AG**
**Zeughausgasse 5**
**Postfach**
**3000 Bern 7 (CH)**

(54) **Optisch transparenter Gegenstand, insbesondere Fenstereinheit, mit einem mehrschichtigen beschichtungsensemble sowie Verfaheren zu dessen Herstellung**

(57) Der optisch transparente Gegenstand, insbesondere die Fenstereinheit mit einem mehrschichtigen Beschichtungsensemble hat eine hohe Strahlungsreflexion für Wärmestrahlung und eine niedrige Strahlungsreflexion sowie eine hohe Strahlungstransmission im sichtbaren Spektralbereich. Das Beschichtungsensemble hat eine erste Schicht (3) im wesentlichen aus einem Material, welches im Wärmestrahlungsbereich (10 μm) einem Brechungsindex grösser 10 und einem Extinktionskoeffizienten grösser 50 hat. Dieses Material ist bevorzugt elektrisch leitend. Die Schichtdicke dieser ersten Schicht (3) ist gerade so gross gewählt, dass die Reflexion der beschichteten Oberfläche eines Substrats (1) bei einer Strahlung im Bereich von 10 μm grösser 90% ist. Die erste Schicht (3) ist zwischen einem im optischen Spektrum hoch brechenden zweiten und dritten, optisch transparenten Material (2, 4) angeordnet. Als oberste Schicht (5) des Ensembles wird ein Material mit gegenüber der zweiten und dritten Schicht (2, 4) optisch niedrigbrechendem Material verwendet.

Fig.1

## Beschreibung

## Technisches Gebiet

Die Erfindung betrifft einen optischen Gegenstand gemäss dem Oberbegriff des Patentanspruchs 1 sowie ein Verfahren zu dessen Herstellung gemäss Patentanspruch 9.

## Stand der Technik

Fenstereinheiten werden nach dem gegenwärtigen Stand der Technik aus sog. Isoliergläsern aufgebaut. Es werden hierbei zwei oder mehr Scheiben mit einem sie distanzierenden Abstandsrahmen miteinander verklebt. Der Zwischenraum zwischen beiden Scheiben bewirkt eine Reduktion von Wärmeverlusten durch die Fenstereinheit hindurch. Ein Mass für Wärmeverlust ist die Wärmedurchgangszahl. Sie gibt die durch eine Flächeneinheit durchfliessende Leistung in $W/m^2$ an. So besitzt eine einzelne Glasscheibe eine typische Wärmedurchgangszahl von 6 $W/m^2$ und ein oben erwähntes Isolierglas von 3,2 $W/m^2$.

Es ist nun versucht worden, Fenstereinheiten herzustellen, welche eine noch niedrigere Wärmedurchgangszahl aufweisen. Dies wurde dadurch erreicht, dass man den Zwischenraum mit einem schlecht wärmeleitenden Gas füllte. Man hat auch anstelle von zwei Scheiben drei mit Abstandshaltern voneinander distanzierte Scheiben verwendet. Dies führte jedoch zu wesentlich schwereren und teureren Fenstereinheiten. Als besonders störend haben sich dann ausserdem, wie auch schon bei den zweischeibigen Fenstereinheiten, Reflexionen an den Scheibenoberflächen bemerkbar gemacht, welche zu Mehrfachbildern führten. Der Reflexionsfaktor pro Scheibenoberfläche ist abhängig von Einstrahlungs- bzw. Beobachtungswinkel und beträgt bereits bei einem senkrechten Strahlungseinfall 4% pro Oberfläche. Zur Abhilfe ist man deshalb dazu übergegangen, die Scheibenoberflächen mit einer Antireflexionsbeschichtung zu versehen.

## Darstellung der Erfindung

## Aufgabe der Erfindung

Aufgabe der Erfindung ist es, einen optischen Gegenstand, insbesondere eine Fenstereinheit, zu schaffen, welcher bei einer guten optischen Qualität eine gute Wärmedämmung bewirkt.

## Lösung der Aufgabe

Zum Erreichen einer guten optischen Qualität bei einer guten Wärmedämmung wurde bekanntermassen bei einer Fenstereinheit eine Vielzahl von zueinander distanzierten Scheiben sandwichartig angeordnet. Zur Vermeidung der pro Scheibenoberfläche vorhandenen Reflexionen wurde dann diese Vielzahl von Scheiben mit einer Antireflexbeschichtung versehen. Die Erfindung beschreitet nun einen anderen Weg. Es wird nicht mehr eine Vielzahl von Scheiben eingesetzt, es wird vielmehr die Beschichtung auf der Scheibenoberfläche derart ausgebildet, dass sie einerseits entspiegelnd ("antireflex") für Strahlung im optischen Bereich wirkt und andererseits reflektierend für Wärmestrahlung.

Unter einer Strahlung im optischen Bereich wird Strahlung in einem Wellenlängenbereich von 390 nm bis 770 nm verstanden. Die Wellenlänge von Wärmestrahlung liegt im Bereich von 10 μm.

## Kurze Beschreibung der Zeichnungen

Nachfolgend werden Beispiele des erfindungsgemässen optischen Gegenstands und eines Verfahrens zur Herstellung dessen Beschichtung anhand von Zeichnungen näher erläutert. Es zeigen

Fig. 1    einen schematischen Querschnitt durch einen optischen Gegenstand, hier eine Glasscheibe, auf der eine Zirkondioxid-, eine Silber-, eine Titandioxid- und eine Siliziumdioxidschicht aufgebracht sind.

Fig. 2    den Reflexionsverlauf über der Wellenlänge einer senkrecht einfallenden sichtbaren Strahlung auf den in **Figur 1** dargestellten beschichteten Gegenstand,

Fig. 3    einen schematischen Querschnitt durch ein sog. Zweifach-Isolierglas, wobei eine Scheibe das in **Figur 1** dargestellte Beschichtungsensemble hat,

Fig. 4    einen schematischen Querschnitt durch ein Beschichtungsensemble, welches im sichtbaren Spektralbereich entspiegelnd wirkt und

Fig. 5    den Reflexionsverlauf über der Wellenlänge einer senkrecht einfallenden sichtbaren Strahlung auf den in **Figur 4** dargestellten Beschichtungsaufbau.

## Wege zur Ausführung der Erfindung

Zur Erreichung einer guten Wärmedämmung (grosser Reflexionsfaktor für Wärmestrahlung) sowie einer Entspiegelung (Antireflexbeschichtung) im optischen (sichtbaren) Spektralbereich wird auf einen optisch transparenten Gegenstand **1**, hier einer sog. Floatglasscheibe, mit typischerweise einem Brechungsindex von 1,52 ein Beschichtungsensemble **11** aufgebracht, welches eine Folge von hoch- und niedrigbrechenden Materialien aufweist. Das Beschichtungsensemble weist drei dielektrische (nicht leitende) Schichten **2, 4** und **5** sowie eine Metallschicht **3** auf. Die elektrisch leitende Metallschicht **3** wird im Ensemble **11** derart angeordnet, dass die alternierende Folge von hohem und niedrigem Brechungsindex beibehalten wird.

Zur Berechnung eines Beschichtungsensembles mit einer vorgegebenen Schichtenfolge werden Optimierungsprogramme verwendet. Es handelt sich hier um ein Filterproblem. Mit dem Optimierungsprogramm werden eingegebene Werte optimiert. Der Grundansatz für die Schichtenfolge muss jedoch vorgegeben werden. Um nun ein Beschichtungsensemble mit den oben vorgegebenen Eigenschaften zu erhalten, werden einige theoretische Erläuterungen nachfolgend kurz aufgezeigt.

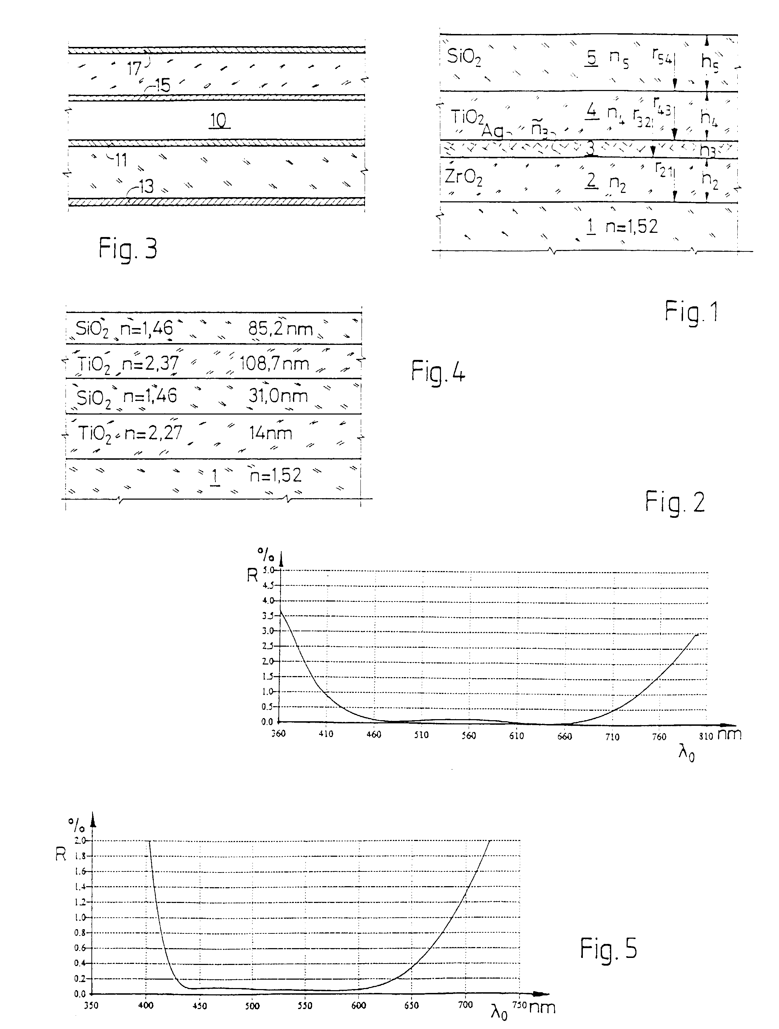

Die Berechnung der Reflexion (Transmission, Absorption) des Beschichtungsensembles erfolgt in Analogie zu den Ausführungen in Max Born, Emil Wolf, "Prinziples of Optics", Kap. 13.4 "Wave Propagation in a Stratified Conducting Medium. Theory of Metallic Films", Seite 627 ff, Pergamon Press, Oxford, 1975. Es wird hier mit (komplexen) Reflexionsvektoren r gerechnet, welche anhand von **Figur 1** erläutert werden. Das Substrat **1** in **Figur 1** ist ein dielektrisches Material mit vernachlässigbaren Verlusten.

Das Substrat **1** habe den optischen Brechungsindex $n_1$. Die darauf liegende Schicht **2** habe optische Verluste. Sie ist z. B. elektrisch leitend und in gewissem Masse für die optische Strahlung durchlässig. Für die Schicht **2** wird somit ein Verluste beschreibender komplexer Brechungsindex $ñ_2$ definiert:

$$ñ_2 = n_2 + i\, n_2\, \kappa_2 = n_2 + ik_2$$

wobei $n_2$ der Brechungsindex und $k_2$ der Extinktionskoeffizient der Schicht **2** ist.

Für die Schicht **3** gilt analoges.

Eine in Richtung auf das Substrat "fortschreitende Welle" sieht dann einen ersten transformierten Reflexionsteil von:

$$r' = [r_{32} + r_{21}\, \exp(2i\gamma_2)] / [1 + (r_{32} \bullet r_{21}\, \exp(2i\gamma_2))]$$

wobei

$$r_{32} = [ñ_3 - ñ_2] / [ñ_3 + ñ_2]$$

der Reflexionsvektor des Übergangs von Schicht **2** zu **3**;

$$r_{21} = [ñ_2 - n_1] / [ñ_2 + n_1]$$

der Reflexionsvektor von Schicht **2** zu **1**; und

$$\gamma_2 = (2\pi/\lambda_0)\, h_2\, (n_2 + jk_2)$$

eine Phasenverschiebung der Welle beim Durchlaufen der Schicht **2** bedeuten.

$h_2$ ist die Schichtdicke der Schicht **2** und $\lambda_0$ die Wellenlänge der betreffenden Strahlung im Vakuum ($\cong$ derjenigen in Luft).

Für einen zweiten Reflexionsteil r" am Schichtübergang zwischen Schicht **4** und **3** gilt dann analog

$$r" = [r_{43} + r'\, \exp(2i\gamma_3)] / [1 + (r_{43} \bullet r'\, \exp(2i\gamma_3))].$$

Das Quadrat des Absolutwertes "letzten" von Luft auf die Schichtoberfläche der Schicht **5** treffenden Reflexionsteils $r'^x$

$$R = |r'^x|^2$$ ergibt dann die Reflexion des Beschichtungsensembles **11**.

Es handelt sich hier um allgemeine theoretische Betrachtungen. Im unten aufgeführten Beispiel mit den Schichten **2, 3, 4** und **5** auf dem Substrat **1**, hat lediglich die Schicht **3** einen komplexen Brechungsindex, der dann mit $ñ_3$ zu bezeichnen wäre. Die Schichten **2**, **4** und **5** haben verschwindend kleine Verluste. Es kann deshalb lediglich mit einem rellen Brechungsindex $n_2$, $n_4$, und $n_5$ gerechnet werden.

Um bereits vor einer Brechung abschätzen zu können, ob mit den ausgewählten Schichten **2** bis **5** das Beschichtungsensemble eine hohe Strahlungsreflexion für Wärmestrahlung und im sichtbaren Spektralbereich eine niedrige Strahlungsreflexion sowie eine hohe Strahlungstransmission ergeben können, geht man wie folgt vor:

Man bestimmt nun die Materialien der einzelnen Schichten. Eine Vorauswahl ist durch physikalische Gegebenheiten, wie Haftfähigkeit, Kratzfestigkeit usw. gegeben. Ferner ist aus obigen Ausführungen bekannt, dass im Beschichtungsensemble **11** sich alternierend Schichten mit hohem und niedrigem Brechungsindex abzulösen haben.

Beim Aufbau des Beschichtungsensembles **11** wird ferner aus Kostenersparnisgründen darauf geachtet, eine möglichst kleine Anzahl von Schichten zu verwenden. Das Beschichtungsensemble **11** soll nun wenigstens eine Schicht **3** enthalten, welche bevorzugt eine hohe Wärmedämmung im Wärmestrahlungsbereich bewirkt, also in diesem Strahlungsbereich eine hohe Reflexion hat. Im sichtbaren Bereich sollen nun die durch diese Schicht **3** hervorgerufene Reflexion sowie eine Reflexion der Substratoberfläche durch eine geeignete phasenmässige Kopplung der oben beschriebenen Teilreflexionen erreicht werden.

Als Schichtmaterial für die Schicht **3** kommt bevorzugt Silber in Frage. Gold, Kupfer und Rhodium kommen nur bedingt in Frage, da sie im Vergleich zu Silber einen höheren Absorptionskoeffizienten haben und damit verbunden eine Eigenfarbe hervorrufen. Alle Alternativen zu Silber liefern neben einer ausgeprägten Transmissionsfarbe von 10% bis 20% niedrigere Transmissionswerte im Sichtbaren, was bei gewissen Anwendungen wohl erwünscht sein kann.

Gemäss American Institute of Physics Handbook, Section 6 Optics, 6-107 bis 6-119, McGraw-Hill Handbooks, 2nd Edition 1963 hat

Silber bei 10 µm n = 10,69 und k = 69,0 sowie bei 390 - 770 nm n = ≈ 0,075 ... 0,09 und k = ≈ 1,03 ... 5,45

Gold bei 10 µm n = 25,2 und k = 55,9 sowie bei 390 - 770 nm n = ≈ 1,3 ... 0,15 und k = ≈ 1,7 ... 4,65

Kupfer bei 10 µm n = 11 und k = 50,6 sowie bei 390 - 770 nm n = ≈ 0,87 ... 0,17 und k = ≈ 2,2 ... 4,8.

Die Schichtdicke der Schicht 3 bestimmt man nun versuchsweise derart, dass lediglich bei einer einzigen Schicht auf dem Substrat 1 eine Reflexion für Wärmestrahlung (bei 10 µm) von grösser 90% erreicht wird. Bei Verwendung von Silber erreicht man das in einem Schichtdickenbereich zwischen 6 nm und 15 nm. Eine optische Verfärbung sollte gerade noch tolerierbar sein. Diese experimentell ermittelte Schichtdicke wird dann dem unten beschriebenen Berechnungs- und Optimierungsverfahren zu Grunde gelegt.

Man setzt nun zeichnerisch die einzelnen Reflexionsvektoren $r_{21}$, $r_{32}$, $r_{43}$ und $r_{54}$ zu einem geschlossenen geometrischen vieleckigen, hier viereckigen Gebilde zusammen. Die Ekkenzahl ist gleich der Anzahl Teilreflexionen. Die hierbei erhaltenen Winkel zwischen den einzelnen Vektoren ergeben dann den entsprechenden Phasenwinkel $\gamma$, aus dem sich wiederum die Schichtdicke h gemäss obigen Beziehungen ermitteln lässt. Schliesst sich das Vieleck, d.h. die Vektorspitze der obersten Teilreflexion (Luft - Schicht 5) trifft auf den Fusspunkt der ersten Teilreflexion (Substrat 1 - erste Schicht 2), so ist keine Reflexion vorhanden. Die verbleibende "Lücke" ist ein Mass für die Reflexion.

Mit einem Optimierungsprogramm kann nun eine Optimierung der betreffenden Schichtdicken erreicht werden.

Als vorteilhaft hat sich erwiesen, lediglich eine einzige wärmereflektierende Schicht analog zur Schicht 3 zu verwenden. Selbstverständlich können auch mehrere derartige Schichten verwendet werden. Als Material für die Schicht 3 ist Silber auf Grund seiner exzellenten optischen Eigenschaften gewählt worden. Nur mit Silber lassen sich in der Durchsicht neutrale Beschichtungen herstellen. Alle anderen Kandidaten wie Gold, Kupfer und Rhodium zeigen im Sichtbaren bereits eine starke Dispersion und damit verbunden eine starke Eigenfarbe sowie eine deutlich reduzierte Transmission. Die Silberschicht 3 wird mit einer Schichtdicke zwischen sechs und fünfzehn Nanometern, bevorzugt mit acht Nanometern hergestellt. Silber eignet sich ferner aufgrund seiner leichten Verdampfbarkeit bei einem Sputterverfahren. Es könnte auch Gold und Rhodium verwendet werden, jedoch sind hier die Materialkosten gegenüber Silber bedeutend höher. Es können ferner auch Kupfer und Aluminium verwendet werden, es müssen hier jedoch besondere Vorkehrungen getroffen werden, um beide Materialien metallisch abzuscheiden, was auf Schwierigkeiten stösst, da die Schicht 3 von Oxidschichten und/oder Nitridschichten umgeben ist.

Da das Material der Schicht 3 im sichtbaren Bereich einen Brechungsindex aufweist, der kleiner ist als derjenige der Glasscheibe (Substrat 1), kommt unmittelbar auf das Substrat 1 eine Schicht 2 mit einem hochbrechenden Material. Es wurde hier Zirkondioxid $ZrO_2$ mit n = 2,06 und einer Schichtdicke von 39 nm gewählt. Die Schicht 2 stellt gleichzeitig einen Haftvermittler für die nachfolgende Silberschicht 3 dar. Auf die Silberschich 3 kommt dann wieder eine hochbrechende Schicht 4, auf diese wiederum eine niedrigbrechende Schicht 5. Die Schicht 4 besteht aus Titandioxid $TiO_2$ mit einem Brechungsindex von 2,39 und einer Dicke von 14,3 nm. Die oberste Schicht 5 besteht aus Siliziumdioxid $SiO_2$ mit einem Brechungsindex von 1,46 und einer Dicke von 67,7 nm.

Anstelle der hier aufgeführten Materialien für die Schichten 2, 4 und 5 können auch andere Oxide, Dioxide, Nitride, Fluoride, ... insbesondere von Elementen der Gruppe IVa des Periodensystems sowie des Siliziums verwendet werden. Selbstverständlich ergeben sich dann andere Schichtdicken.

Die gemäss obigem Beispiel beschichtete Floatglasscheibe zeigt den in Figur 2 dargestellten Reflexionsverlauf im sichtbaren Spektralbereich, wobei deren Emissivität signifikant auf Werte von unter 0,1 reduziert worden ist.

Ein Zweifach-Isolierglas zeigt Figur 3. Hier trägt eine der beiden zum Scheibenzwischenraum 10 zeigenden Oberflächen das Beschichtungsensemble 11, gemäss obigen Ausführungen (Antireflexion im Sichtbaren und Wärmedämmung). Die restlichen Oberflächen sind mit einer beispielsweisen Antireflexbeschichtung 13, 15 und 17 gemäss den Figuren 4 und 5 versehen. Die Wärmedurchgangszahl liegt hier bei 1,3 $W/m^2$ und einer Reflexion im Sichtbaren von unter 1% (bei vier Oberflächen). Würde man die Schicht 11 durch ein bekanntes Antireflexbeschichtungsensemble analog zu den Antireflexbeschichtungsensembles 13, 15 und 17 ausbilden, so erhielte man zwar eine entsprechende Entspiegelung. Bei einem Zweifach-Isolierglas lediglich mit den bekannten Antireflexbeschichtungen gemäss den Figuren 4 und 5 ergibt sich jedoch eine Wärmedurchgangszahl von 3,2 $W/m^2$ also mehr als das doppelte als beim obigen erfindungsgemässen Beispiel.

Anstatt, wie in Figur 3 dargestellt, bei Mehrfach-Isolierglasscheiben nur auf einer dem Zwischenraum 10 zwischen den Scheiben zugewandten Oberfläche ein Beschichtungsensemble analog zu Figur 1 aufzubringen, kann selbstverständlich auf jeder der Oberflächen ein derartiges Beschichtungsensemble aufgebracht werden. Auf den Zwischenraum **10** kann auf keinen Fall verzichtet werden, da ansonsten keine Reduktion der Wärmedämmung erreichbar wäre. Es können jedoch eine oder beide der zum Isolierglas verarbeiteten Scheiben durch ein Laminat (Verbundsicherheitsglas) ersetzt werden, das aus zwei oder mehreren Einzelschieben besteht. Das Laminat ist dann seinerseits wieder an den äusseren Oberflächen mit den entsprechenden Beschichtungsensembles versehen und wird über einen Zwischenraum mit einer weiteren Einzelscheibe oder einem weiteren Laminat zu einer Isolierglaseinheit verklebt.

Die einzige Silberschicht **3** kann in einer speziellen Ausführung auch in zwei Schichten aufgespalten werden, die dann ihrerseits durch eine hochbrechende dielektrische Schicht voneinander getrennt sind.

## Patentansprüche

1. Optisch transparenter Gegenstand **(1)**, insbesondere Fenstereinheit mit einem mehrschichtigen Beschichtungsensemble **(11)**, **dadurch gekennzeichnet,** dass der beschichtete Gegenstand eine hohe Strahlungsreflexion für Wärmestrahlung und eine niedrige Strahlungsreflexion sowie hohe Strahlungstransmission im sichtbaren Spektralbereich hat, in dem insbesondere eine erste Schicht **(3)** im Beschichtungsensemble **(11)** im wesentlichen aus einem Material mit einem Brechungsindex grösser 10 und einem Extinktionskoeffizienten grösser 50 im Wärmestrahlungsbereich, insbesondere aus einem elektrisch leitenden Material, besteht, deren Schichtdicke **(h$_3$)** gerade so gross gewählt ist, dass als einzelne Schicht für Wärmestrahlung in einem Wellenlängenbereich um 10 μm herum eine Reflexion grösser 90% sich ergibt und in Durchsicht eine optisch sichtbare Verfärbung einer Weisslichtstrahlung gerade nicht erkennbar ist und bevorzugt die erste Schicht **(3)** zwischen je einer Schicht **(2, 4)** mit einem im optischen Spektrum hoch brechenden zweiten und dritten, optisch transparenten Material angeordnet ist und als oberste Schicht **(5)** des Ensembles **(11)** ein Material mit gegenüber der zweiten und dritten Schicht **(2, 4)** optisch niedrigbrechendem Material verwendet wird.

2. Beschichteter Gegenstand nach Anspruch 1, **dadurch gekennzeichnet**, dass das Material der ersten Schicht **(3)** im wesentlichen aus einem Metall hoher elektrischer Leitfähigkeit und damit verbundener hoher Reflexion für Wärmestrahlung bei gleichzeitig niedrigem Absorptionskoeffizienten im sichtbaren Spektralbereich besteht.

3. Beschichteter Gegenstand nach einem der Ansprüche 1 bis 3, **dadurch gekennzeichnet**, dass das Material der ersten Schicht **(3)** ein Element der chemischen Gruppe Ib, insbesondere Silber ist und die Schichtdicke bevorzugt zwischen 6 und 15 Nanometer liegt, insbesondere 8 Nanometer dick ist.

4. Beschichteter Gegenstand nach einem der Ansprüche 1 bis 3, **dadurch gekennzeichnet**, dass das Material wenigstens einer der zweiten, dritten und/ oder obersten Schicht **(2, 4, 5)** ein Oxid, insbesondere ein Dioxid bevorzugt mit einem Element des chemischen Periodensystems IVa bzw. Va, vorzugsweise $TiO_2$, $ZrO_2$, $Ta_2O_5$, $Nb_2O_5$ bzw. $SiO_2$ ist.

5. Beschichteter Gegenstand nach einem der Ansprüche 1 bis 4, **dadurch gekennzeichnet**, dass er scheibenartig ausgebildet ist, wobei auf einer ersten Scheibenoberseite das eine hohe Wärmestrahlungsreflexion und hohe optische Transmission aufweisende, erste Beschichtungsensemble **(11)** und auf der anderen, zweiten Scheibenoberseite ein weiteres, zweites Beschichtungsensemble **(13)** mit lediglich einer hohen optischen Transmission aufgebracht ist.

6. Beschichteter Gegenstand nach Anspruch 5, **gekennzeichnet** durch wenigstens einen weiteren optisch transparenten, scheibenartig ausgebildeten Gegenstand, der in einem Abstand **(10)** zum ersten Gegenstand unter Bildung eines sog. Zweifach-Isolierglases gehalten ist, wobei die Scheibenoberseite mit dem ersten Beschichtungsensemble **(11)** des ersten Gegenstands benachbart zum Zwischenraum zwischen den beiden Scheiben angeordnet ist und der zweite Gegenstand bevorzugt beidseits das zweite Beschichtungsensemble **(15, 17)** aufweist.

7. Beschichteter Gegenstand nach Anspruch 6, **dadurch gekennzeichnet**, dass der weitere, zweite scheibenartige Gegenstand auf einer ersten Scheibenoberfläche ebenfalls das erste Beschichtungsensemble **(11)** aufweist sowie auf der anderen, zweiten Scheibenoberfläche das zweite Beschichtungsensemble aufgebracht ist, wobei die ersten Beschichtungsensembles **(11)** beider Scheiben einander benachbart angeordnet sind.

8. Beschichteter Gegenstand nach Anspruch 6, **dadurch gekennzeichnet**, dass der zweite scheibenartig ausgebildete Gegenstand aus wenigstens zwei mit einem Laminat verbundenen Einzelglasscheiben besteht, wobei die beiden Aussenseiten des Scheibenpaketes das Beschichtungsensemble tragen.

9. Verfahren zur Herstellung eines optisch transparenten Gegenstands, insbesondere einer Fenstereinheit nach einem der Ansprüche 1 bis 8 mit wenigstens einem Beschichtungsensemble **(11)** mit einer hohen Strahlungsreflexion für Wärmestrahlung und im sichtbaren Spektralbereich einer niedrigen Strahlungsreflexion sowie hohe Strahlungstransmission, wobei auf einem Floatglas als Substrat **(1)** des Gegenstands in einem kontinuierlichen Durchlaufverfahren zuerst Zirkon in einer reaktiven Mischatmosphäre aus Argon und Sauerstoff zu einer Zirkondioxid-Schicht aufgesputtert wird, anschliessend in einer neutralen Atmosphäre eine Silberschicht und in einer weiteren reaktiven Mischatmosphäre aus Argon und Sauerstoff Titan und dann Silizium zu einer Titandioxid und anschliessend zu einer Siliziumdioxidschicht aufgesputtert wird, wobei bevorzugt die Silberschichtdicke zwischen 6 und 15 Nanometer, insbesondere zu 8 nm, die Zirkondioxid-Schichtdicke zu 39 nm, die Titandioxidschichtdicke zu 15 nm und die Siliziumdioxidschichtdicke zu knapp 68 nm gewählt wird.

Fig. 3

Fig. 1

Fig. 4

Fig. 2

Fig. 5

| Europäisches Patentamt | **EUROPÄISCHER RECHERCHENBERICHT** | Nummer der Anmeldung EP 99 81 0163 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 035 906 A (TEIJN LIMITED) 16. September 1981 * Seite 11, Zeile 31 - Seite 12, Zeile 6; Anspruch 1 * * Seite 12, Zeile 37 - Seite 13, Zeile 9 * | 1-8 | C03C17/36 |
| P,X | US 5 858 519 A (R.E. KLINGER) 12. Januar 1999 * das ganze Dokument * | 1-9 | |
| X | GB 2 279 365 A (GLAVERBEL) 4. Januar 1995 * Zusammenfassung * * Seite 14, Zeile 8 - Zeile 18 * | 1-3,9 | |
| A | EP 0 226 993 A (PPG INDUSTRIES INC.) 1. Juli 1987 * Anspruch 1 * | 1-9 | |

RECHERCHIERTE SACHGEBIETE (Int.Cl.6)

C03C

Der vorliegende Recherchenbericht wurde für alle Patentansprüche erstellt

| Recherchenort | Abschlußdatum der Recherche | Prüfer |
|---|---|---|
| DEN HAAG | 9. Juni 1999 | Reedijk, A |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 81 0163

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-1999

| Im Recherchenbericht angeführtes Patentdokument | Datum der Veröffentlichung | Mitglied(er) der Patentfamilie | | Datum der Veröffentlichung |
|---|---|---|---|---|
| EP 35906 A | 16-09-1981 | JP | 1370814 C | 25-03-1987 |
| | | JP | 56126152 A | 02-10-1981 |
| | | JP | 61034384 B | 07-08-1986 |
| | | JP | 1016671 B | 27-03-1989 |
| | | JP | 1547049 C | 28-02-1990 |
| | | JP | 56169056 A | 25-12-1981 |
| | | JP | 1404094 C | 09-10-1987 |
| | | JP | 57001754 A | 06-01-1982 |
| | | JP | 62006495 B | 12-02-1987 |
| | | JP | 1404095 C | 09-10-1987 |
| | | JP | 57001755 A | 06-01-1982 |
| | | JP | 62006497 B | 12-02-1987 |
| | | CA | 1198301 A | 24-12-1985 |
| | | US | 4413877 A | 08-11-1983 |
| US 5858519 A | 12-01-1999 | KEINE | | |
| GB 2279365 A | 04-01-1995 | BE | 1008858 A | 06-08-1996 |
| | | CH | 687924 A | 27-03-1997 |
| | | DE | 4422830 A | 12-01-1995 |
| | | FR | 2708262 A | 03-02-1995 |
| | | IT | 1266023 B | 16-12-1996 |
| | | LU | 88503 A | 01-02-1995 |
| | | NL | 9401030 A | 16-01-1995 |
| EP 226993 A | 01-07-1987 | US | 4716086 A | 29-12-1987 |
| | | AT | 54300 T | 15-07-1990 |
| | | AU | 571380 B | 14-04-1988 |
| | | AU | 6654986 A | 25-06-1987 |
| | | CA | 1327294 A | 01-03-1994 |
| | | CN | 1019319 B | 02-12-1992 |
| | | DK | 618586 A | 24-06-1987 |
| | | ES | 2015525 T | 01-09-1990 |
| | | FI | 865262 A,B, | 24-06-1987 |
| | | GR | 3000824 T | 15-11-1991 |
| | | HK | 67592 A | 18-09-1992 |
| | | IN | 169768 A | 21-12-1991 |
| | | JP | 2015149 C | 02-02-1996 |
| | | JP | 7045710 B | 17-05-1995 |
| | | JP | 62196366 A | 29-08-1987 |
| | | NO | 174286 B | 03-01-1994 |
| | | US | 4786563 A | 22-11-1988 |

EPO FORM P0461

Für nähere Einzelheiten zu diesem Anhang : siehe Amtsblatt des Europäischen Patentamts, Nr.12/82